(19)

Europäisches Patentamt

European Patent Office

Office européen des brevets

(11) **EP 3 336 728 A1**

(12) **EUROPEAN PATENT APPLICATION**

(43) Date of publication:
**20.06.2018 Bulletin 2018/25**

(51) Int Cl.:
***G06F 17/50*** *(2006.01)*

(21) Application number: **16382603.5**

(22) Date of filing: **15.12.2016**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(71) Applicant: **Airbus Operations, S.L.**
**28906 Getafe Madrid (ES)**

(72) Inventors:
• **VINHA, Nuno**
**28906 Getafe (ES)**
• **VALLESPIN FONTCUBERTA, David**
**28906 Getafe (ES)**
• **DE PABLO FOUCE, Valentín**
**28906 Getafe (ES)**
• **VALERO, Eusebio**
**28906 Getafe (ES)**

(74) Representative: **Elzaburu S.L.P.**
**C/ Miguel Angel, 21**
**28010 Madrid (ES)**

(54) **METHOD AND SYSTEM FOR A QUICK PREDICTION OF VORTEX TRAJECTORIES ON AIRCRAFT COMPONENTS**

(57) The invention provides a computer-aided method suitable for assisting in the design of an object zone such as a CROR engine of an aircraft subjected to high vorticity and/or low static pressure fields when moving inside a flow field by providing suitable seed points for constructing vortex core lines in a fluid data model of the environment of said object zone and a system based in said method. The method steps are: a) Obtaining a dataset containing all the cells or points satisfying one of the conditions of four Region-based vortex detection criteria (the Q-criterion, the Kinematic vorticity number, the $\Delta$-criterion, the $\lambda_2$-criterion); b) Obtaining a new dataset containing all the cells or points of the previous dataset satisfying one of the conditions mentioned in step a) not selected previously; c) Repeating the step b) until all the conditions mentioned in step a) have been selected in step b).

**FIG. 2**

EP 3 336 728 A1

## Description

### FIELD OF THE INVENTION

The present invention refers to a method to assist in the design of components with parts moving relative to a flow, particularly Counter Rotating Open Rotor (CROR) engines installed in aircraft, in their endeavour to reduce noise levels, drag, vibrations, and fatigue loads, due to vortex-surface interaction.

### BACKGROUND OF THE INVENTION

In recent years Counter Rotating Open Rotor (CROR) engines have become of prime interest in the aeronautical industry, in search for more efficient aircraft configurations. Amongst the biggest drawbacks in these particular engine types are the high levels of noise generated, both broadband and tonal, and design focus is on trying to reduce it. As it is well known a major contribution to tonal noise is caused by the first stage rotor blade tip vortices impacting on the second stage rotor. The impact condition is also undesirable from the aerodynamic and structural point of view, as it penalizes drag, and increases significantly vibrations and fatigue loads nearby the impact regions.

Thanks to the development in Computational Fluid Dynamics (CFD) techniques and the exponential growth in computational power today it is possible to obtain detailed flow behaviour predictions under normal operating conditions.

A new problem arises from these types of simulation, which is the large amount of data that needs to be processed to be able to derive valuable conclusions. In particular, the simulations focusing on noise prediction require very small time steps and large meshes which increases the data reduction process and analysis on the part of the designers. Most methodologies in noise prediction move from the CFD analysis directly to noise propagation models based on pressure data around known noise sources which gives quantitative noise information at relevant distances around the source at high computational costs.

Surprisingly, a precise and unique mathematical definition of a vortex does not exist in literature.

A vortex was defined by Lugt in 1979 as "the rotating motion of a multitude of material particles around a common center" [1]. Later on, Robinson provided the following definition: "a vortex exists when instantaneous streamlines mapped onto a plane normal to the vortex core exhibit a roughly circular or spiral pattern, when viewed from a reference frame moving with the center of the vortex core" [2]. Another definition of a vortex came from Portela [3], considering that "a vortex is comprised of a central core region surrounded by swirling streamlines".

The lack of consensus for a rigorous and unique definition of a vortex gave rise to the development of several vortex detection algorithms. Kolar in [4] enumerates more than twenty vortex detection methods developed in the last three decades. The majority of these methods consider that any vortical structure contains a core/skeleton line, and a swirling fluid motion around that line. Hence, two main categories of vortex extraction methods can be found in literature:

- The ones that look for vortex core lines, or the imaginary center of rotational motion, are usually called line-based (LB) methods.
- The ones that search for vortex core regions or for "regions of influence" of the vortex core line [5]. These schemes are commonly known as region-based (RB) methods, mainly allowing the visualization of iso-surfaces of a certain scalar field that represent the vortex core boundary.

According to [6], RB methods are easier to implement and require less computational burden in comparison to LB schemes. However, the latter can provide a more accurate representation of the vortex, especially when the distance between two individual structures is considerably small. This is the biggest limitation of RB methods, with higher relevance for strongly curved rotating structures.

In LB methods, the region of rotational influence of a vortex can additionally be estimated, using surface-based techniques. In [7] we can find several surface methods developed particularly for vortex visualization.

The vorticity-predictor pressure-corrector method is a well-known LB method, and it was introduced by Banks & Singer in 1995 [8]. The algorithm basically extracts streamlines of the vorticity field during a predictor step, correcting these predictions based on the local minimum pressure in a corrector step, and providing a more precise approximation of a vortex core skeleton. The method relies on both a low static pressure and a high vorticity magnitude criterion to investigate if a certain point belongs to a vortex skeleton. Nonetheless, and according to [8], it is possible to have regions with low pressure or with high vorticity magnitude without being associated with a vortex.

Examples of such cases are the flow downstream of an obstacle and a shear flow, respectively. Nevertheless, the authors believe that the combination of these two criteria is a powerful indication of the presence of a vortex.

The algorithm starts by an initialization step, which looks for possible candidate seeds at every grid point of the fluid domain. The initialization of the original Banks & Singer method [8] is based on arbitrary user inputs which may be inferred from thresholds of low static pressure and high vorticity magnitude. A good candidate point is thus a grid point that satisfies the two thresholds. The method also foresees corrections to the position of these candidate points, so that they are not constrained to the grid.

From the candidate points extracted during the pre-processing step, the algorithm starts developing the vortex core lines. At each iteration point, a predictor step is firstly applied, followed by a correction treatment, as we can observe in the following pseudocode (adapted from [6]):

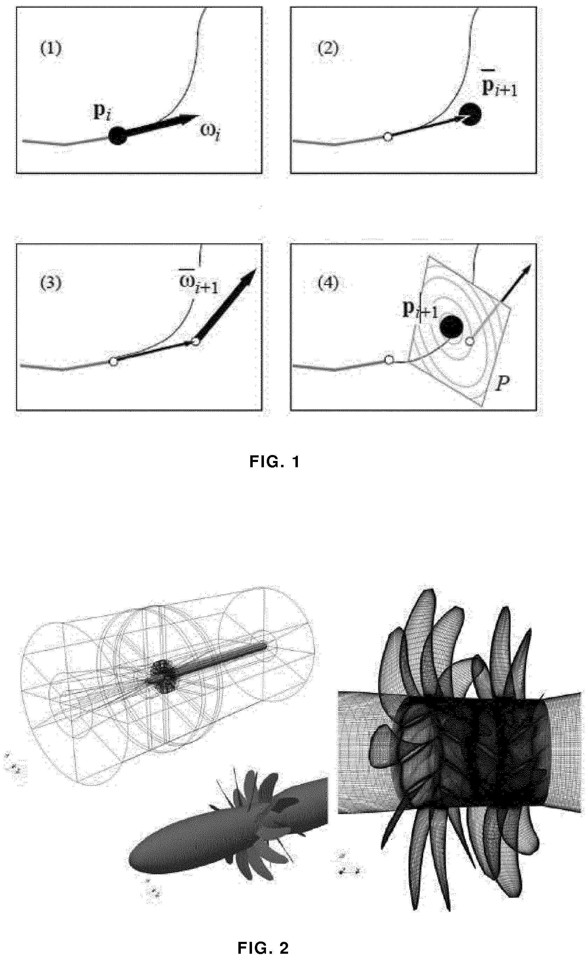

```
1: locate seeds with low pressure P and high vorticity magnitude |ω|
2: for all seeds do
3: repeat
4: compute ω_i at current seed point p_i,(Fig.1_1)
5: step in ω_i to predict next point p_{i+1} (Fig.1_2)
6: compute ω_{i+1} at predicted point p_{i+1} (Fig.1_3)
7: procedure (find P_min on plane ⊥ ω_{i+1} (Fig.1_4)
8: if ∡ (ω_{i+1}, ω_{Pmin}) < limit then
9: correct predicted point p_{i+1} to p_{Pmin},
10: else
11: quit corrector phase
12: end if
13: end procedure
14: until skeleton exits domain or is too long
15: end for
```

The steps comprising the original predictor-corrector method are schematically sketched in Figure 1:

- Step 1: Compute the vorticity at a point of the vortex core.
- Step 2: Step in the vorticity direction to predict the next point.
- Step 3: Compute the vorticity at the predicted point.
- Step 4: Correct to the pressure min. in the perpendicular plane.

Note that for the predictor and corrector steps the method uses only vector quantities.

The algorithm expects that any vortex core line stops growing when it starts leaving the fluid domain, and when the total arclength along a skeleton line is at least two times bigger than the highest grid dimension [8]. The method is also capable of eliminating redundant seeds, skeletons, and any spurious feeders that may appear during its computation. The present LB method can additionally be combined with techniques that provide a geometrical approximation of the shape of the vortex, from cross-sections of the vortex tubes in planes perpendicular to the imaginary core.

As explained before, the vortex lines start growing from a set of candidate points resulting from the initialization step. The original method makes the selection of candidates according to high vorticity and low static pressure threshold criteria. A candidate point is thus a grid point that satisfies exclusively these two thresholds.

Normally this methodology works fine for simple academic test cases, with a low number of grid points. However, when dealing with a large scale industrial case with high flow complexity (such as the aircraft CROR engine shown in Figure 2, where each solution snapshot contains around 95 million points), the original initialization may return a huge amount of candidate points. This will directly penalize the subsequent predictor-corrector step, once it has to be started from each one of those candidate points, resulting in excessive and prohibitive computational burdens. Furthermore, by relying exclusively on those two threshold criteria, there is not a physical guarantee that the selected thresholds contain the most relevant features. As an example for the CROR case shown in Figure 2, by setting a threshold for cells whose vorticity magnitude is higher or equal to only 0.15% of the maximum vorticity of the computational domain, this criterion fails to extract cells related to the tip vortex emerging from the first rotating row. The output of the aforementioned vorticity threshold is only associated with the boundary layer of the rotating surfaces, where vorticity can also be high. Alternatively, for the lowest static pressure values of the domain, the corresponding threshold filter retrieves no more than points or cells located in low pressure zones of the blades. And for the present CROR test case, significant trial and error tests were required to correctly tune a static pressure threshold that allowed the extraction of cells or points related to tip vortices.

The original initialization process relies only on thresholds, and so there is always a user interference that cannot be avoided in the Banks & Singer method. Moreover, as the present CROR test case demonstrated, it is not a straightforward task for the designer/analyzer/engineer to correctly adjust thresholds relying on static pressure and vorticity magnitude. There are several flow regions apart from the tip vortices where the static pressure is low and the vorticity is high, reducing the probability of those two criteria to extract cells or points associated to tip vortices. Furthermore, the pressure and vorticity thresholds set for one case probably have to be changed for different flow problems.

The present invention is addressed to the solution of this problem, by increasing the probability of the Banks & Singer pre-processing step to find candidate cells or points that develop into a tip vortex core line.

## SUMMARY OF THE INVENTION

It is an object of the present invention to provide a computer-aided method suitable for assisting in the design of an object zone subjected to high vorticity and/or low static pressure fields when moving inside a flow field by providing suitable seed points for constructing vortex core lines in a fluid data model of the environment of said object zone.

The fluid data model comprises a CFD dataset and/or wind tunnel data and/or experimental volumetric data and/or flow field analytical data.

The computer-aided method can be employed to provide the candidate seeds from which vortex core lines develop, following the predictor step and the correction treatment of the above-mentioned Banks & Singer method or any other suitable Line-based (LB) method.

The computer-aided method comprises the following steps:

a) Obtaining a dataset containing all the cells or points satisfying one of the following conditions:

- $Q > Q_{threshold}$, being $Q$ the Region-based $Q$-criterion and $Q_{threshold}$ a suitable positive parameter for the object zone;
- $N_k > N_{k,threshold}$, being $N_k$, the Region-based Kinematic vorticity number and $N_{k,threshold}$ a suitable parameter higher than 1 for the object zone;
- $\Delta > \Delta_{threshold}$, being $\Delta$ the Region-based $\Delta$-criterion and $\Delta_{threshold}$ a suitable positive parameter for the object zone;
- $\lambda_2 < \lambda_{2threshold}$, being $\lambda_2$ the Region-based $\lambda_2$-criterion and $\lambda_{2threshold}$ a suitable negative parameter for the object zone;

b) Obtaining a new dataset containing all the cells or points of the previous dataset satisfying one of the conditions mentioned in step a) not selected previously;

c) Repeating the step b) until all the conditions mentioned in step a) have been satisfied in step b).

The final dataset contains the above-mentioned candidate seeds.

It is another object of the invention to provide a system comprising a computer memory and processor for assisting in the design of an object zone subjected to high vorticity and/or low static pressure fields when moving inside a flow field by providing suitable seed points for obtaining vortex core lines in a fluid data model of the environment of said object zone.

The system comprises a fluid data model of the environment of said object zone and a computer-implemented module for identifying cells or points of the object zone following the steps of the above-mentioned method.

In an embodiment of said method and system the object is an aircraft.

In another embodiment of said method and system the object zone is a Counter Rotating Open Rotor (CROR) engine of an aircraft.

In another embodiment of said method and system the object zone is a Counter Rotating Open Rotor (CROR) engine of an aircraft and the fluid data model comprises an area covering the vortices generated by a blade tip of the first stage of the engine that impact the second stage of the engine.

Other desirable features and advantages of the invention will become apparent from the subsequent detailed description of the invention and the appended claims, in relation with the enclosed drawings.

## BRIEF DESCRIPTION OF THE DRAWINGS

Figure 1 illustrates the four steps of the Banks & Singer pressure-predictor vorticity-corrector method (from [8]).

Figure 2 shows the computational domain and the structured mesh of an aircraft CROR engine used in an embodiment of the invention.

Figure 3 shows a representation of iso-surfaces for three values of $Q$.

Figure 4 shows a representation of iso-surfaces for two values of $N_k$.

Figure 5 shows a representation of iso-surfaces for three values of $\Delta$.

Figure 6 shows a representation of iso-surfaces for three values of $\lambda_2$.

## DETAILED DESCRIPTION OF THE INVENTION

The method comprises the following steps:

1. Calculate the velocity gradient tensor at each cell or point of the fluid domain.

2. Select only one of the four following gradient-based methods:

- **Q-criterion**
  The Q-criterion was proposed by Hunt et al. [9] and searches for coherent vortex structures based on the properties of the local velocity gradient tensor $\nabla\mathbf{v}$ that can be written in the following form:

$$\boldsymbol{\nabla} v = \begin{pmatrix} \dfrac{dv_x}{dx} & \dfrac{dv_x}{dy} & \dfrac{dv_x}{dz} \\[2mm] \dfrac{dv_y}{dx} & \dfrac{dv_y}{dy} & \dfrac{dv_y}{dz} \\[2mm] \dfrac{dv_z}{dx} & \dfrac{dv_z}{dy} & \dfrac{dv_z}{dz} \end{pmatrix} \tag{1}$$

where $(V_x, V_y, V_z)$ correspond to the velocity components in the Cartesian coordinates $(x,y,z)$, respectively. The velocity gradient tensor $\nabla\mathbf{v}$ can then be decomposed into its symmetric part $\mathbf{S}$ and antisymmetric part $\Omega$, as follows:

$$S_{ij} = \frac{1}{2}\left(\frac{\partial v_i}{\partial x_j} + \frac{\partial v_j}{\partial x_i}\right) = \frac{1}{2}(\boldsymbol{\nabla} v + \boldsymbol{\nabla} v^T) \tag{2}$$

$$\Omega_{ij} = \frac{1}{2}\left(\frac{\partial v_i}{\partial x_j} - \frac{\partial v_j}{\partial x_i}\right) = \frac{1}{2}(\boldsymbol{\nabla} v - \boldsymbol{\nabla} v^T) \tag{3}$$

The component $\mathbf{S}$ represents the shear contribution of the velocity gradient tensor, whereas the part $\Omega$ is associated with the rotational contribution of $\nabla\mathbf{v}$. The Q-criterion is then defined as the second invariant of $\nabla\mathbf{v}$, allowing to compare the influence of local fluid shear to rotation, as follows:

$$Q = \frac{1}{2}\left(|\Omega|_F^2 - |S|_F^2\right) \tag{4}$$

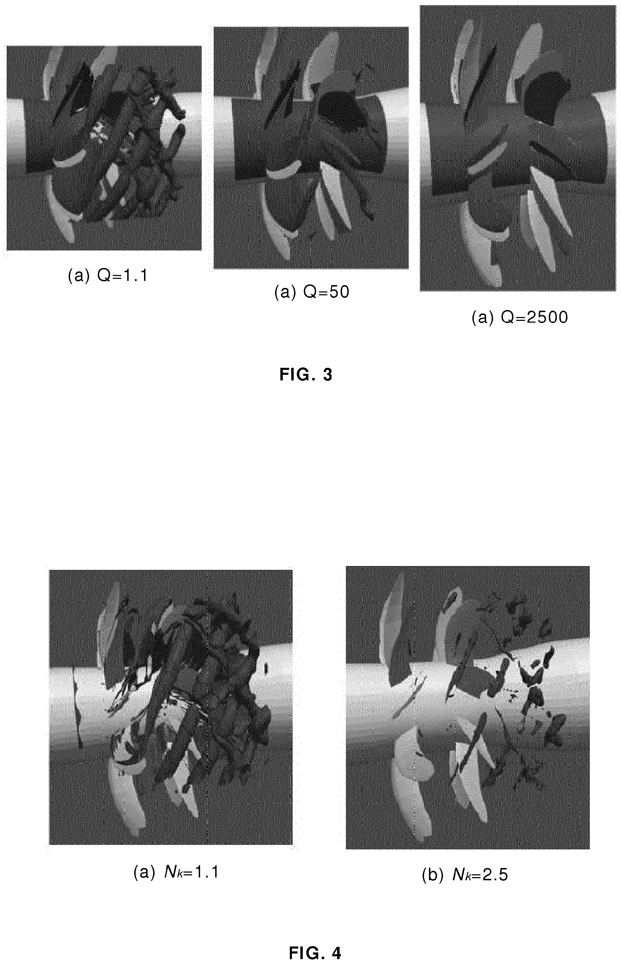

where $|\cdot|_F$ represents the Froebenius norm of the tensors. The general idea behind this criterion is to look for areas of the flow where $Q > 0$, meaning that the local rotation rate is dominating the local shear rate, and thus suggesting the existence of a vortical structure.
The present criterion is quite well accepted among the post-processing community because it can provide reliable visualizations, with a simple implementation and relatively cheap and fast computations. Nonetheless, it requires the selection of a fully arbitrary threshold that may vary from one flow problem to another, and so the value of the threshold must be chosen carefully in order to properly visualize the structures of interest. Moreover, and due to its nature, the method is sensitive to the quality of the derivatives of velocity, which in some cases can be difficult to be computed [5]. The representation of iso-surfaces for three different thresholds of $Q$, in the example being considered, is shown in Figure 3.

- **Kinematic vorticity number**
  The kinematic vorticity number is a parameter introduced by Truesdell [10], which measures the "quality of rotation" regardless of the local magnitude of vorticity. It is defined as:

$$N_k = \frac{|\Omega|_F}{|S|_F} = \sqrt{1 + \frac{2Q}{S_{ij}S_{ij}}} \qquad (5)$$

Basically this criterion demarcates a vortex core region in zones where $N_k>1$, i.e. when the rotational part of the local Vv out-balances its shear part.

The parameter $N_k$ is low inside boundary layers, where vorticity magnitude usually is high, and is appropriate to be used for the detection of a vortex in a boundary layer flow [11]. Similarly to the Q-criterion, this method is of easy implementation and computationally cheap. Nonetheless it might extract vortical structures that are not dynamically relevant for the problem under investigation, especially in regions where both $|S|_F$ and $|\Omega|_F$ are negligible [11]. The representation of iso-surfaces for two different thresholds of $N_k$, in the example being considered, is shown in Figure 4.

- **Δ-criterion**

  Dallmann [12] and Chong et al. [13] came up with a different criterion derived from the characteristic polynomial of the local velocity gradient tensor, taking advantage of the existence of complex eigenvalues of this tensor when the fluid experiences rotation in that cell or point. The characteristic equation for $\nabla\mathbf{v}$ is given by:

$$\lambda^3 + P\lambda^2 + Q\lambda + R = 0 \qquad (6)$$

where the three invariants of the velocity gradient tensor $\nabla\mathbf{v}$ are given by:

$$P = -trace(\nabla v) \qquad (7)$$

$$Q = \frac{1}{2}\left(P^2 - trace(\nabla v)^2\right) \qquad (8)$$

$$R = -det(\nabla v) \qquad (9)$$

The discriminant of the characteristic equation (6) is given by:

$$\Delta = 27R^2 + (4P^3 - 18PQ)R + (4Q^3 - P^2Q^2) \qquad (10)$$

The Δ-criterion defines then a vortex region in cells or points of the fluid domain where Δ has a positive value (i.e. Δ > 0). In those points, the characteristic equation (6) has one real root and two complex roots, conjugated to each other.

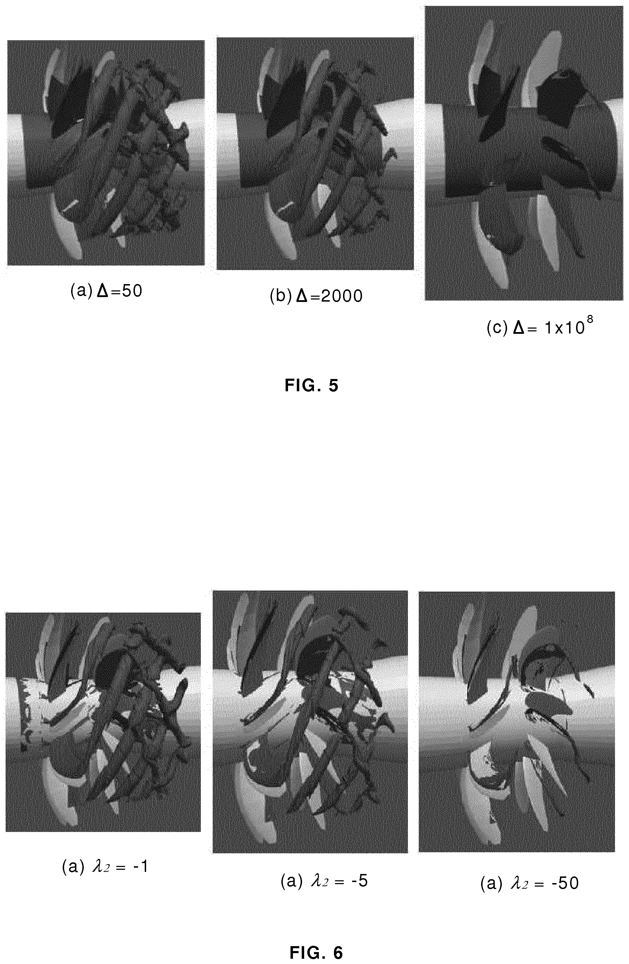

From the practical point of view, the Δ-criterion does not offer significant vortex detection performance improvements in comparison to the Q-criterion that provides a more restrictive selection [14], even though the latter has a simpler definition. Furthermore, and similarly to previous vortex identification methods, the Δ-criterion always requires a certain threshold value, that needs to be selected carefully. The representation of iso-surfaces for three different thresholds of Δ, in the example being considered, is shown in Figure 5.

- **λ$_2$-criterion**

  Jeong and Hussain [15] developed the $\lambda_2$-criterion that aims to detect cells or points of the flow where the pressure is minimum. Vortices are commonly associated with low pressure core regions, meaning that vortices normally rotate around areas of low static pressure. These low pressure regions are a consequence of the centrifugal force that induces a pressure gradient in the fluid, oriented perpendicular to the axis of rotational motion. However, the authors pointed out that the condition of minimum pressure is not always sufficient to guarantee the presence of a vortex in the flow. According to [6], a strong unsteady irrotational straining can originate a pressure minimum in the flow, while viscous effects can vanish the pressure minimum regions inside a vortex. In order to take into account those effects, the authors formulated the following condition (obtained from the Navier-Stokes equations, as demonstrated in [16]):

$$S_{ik}S_{kj} + \Omega_{ik}\Omega_{kj} = -\frac{1}{\rho}\frac{\partial^2 p}{\partial x_i \partial x_j} \tag{11}$$

The sum on the left-hand side of equation (11) is real and symmetric, therefore has three real eigenvalues ranked as $\lambda_1 \geq \lambda_2 \geq \lambda_3$. A pressure minimum exists in a cell or point where two of the three eigenvalues are negative. A vortical structure can thus be identified through manual inspection of the iso-surfaces of negative $\lambda_2$.

The $\lambda_2$ criterion is classified as a region-based, Galilean invariant, local method. Nowadays it is widely used in several post-processing tools due to its improved accuracy over other RB methods derived from the velocity gradient tensor, especially under strong external strains [17]. Another advantage offered by this criterion is related with its precise and nearly automatic threshold [5]. However, [17] alerts for the possibility that in some turbomachinery problems, $\lambda_2$ can be negative almost everywhere in the fluid domain. For these cases, a stronger and more selective threshold is therefore required in order to extract regions with strong vortical behavior.

In terms of computational performance, the $\lambda_2$-criterion is more demanding and takes more time to compute, as it involves the calculation of the eigenvalues of a real and symmetric tensor at every cell or point of the fluid domain. Another limitation of the method is based on its difficulty to make a precise distinction of an individual vortex, in regions where several vortices coexist [6]. Finally, as [16] stresses, boundary layers can also fulfill the $\lambda_2$-criterion, originating negative vortex detections. The representation of iso-surfaces for three different thresholds of $\lambda_2$, in the example being considered, is shown in Figure 6.

3. Calculate the parameter related with the chosen method.

4. Specify the appropriate threshold and proceed to the extraction of candidate seeds:

(a) If the *Q*-criterion is selected:

- Define a positive threshold value for *Q*.
- Extract cells or points where $Q > Q_{threshold}$.

(b) If the Kinematic vorticity number is selected:

- Define a positive threshold value for $N_k$ higher than 1.
- Extract cells or points where $N_k > N_{k,threshold}$.

(c) If the $\Delta$-criterion is selected:

- Define a positive threshold value for $\Delta$.

- Extract cells or points where $\Delta > \Delta_{threshold}$.

(d) If the $\lambda_2$-criterion is selected:

- Define a negative threshold value for $\lambda_2$.

- Extract cells or points where $\lambda_2 < \lambda_{2,threshold}$.

5. After the previous extraction, a new dataset containing only the extracted cells or points that respect the imposed threshold is created.

6. In order to refine the previous extraction of candidate seed cells or points, select an alternative gradient-based method.

7. Repeat steps 3, 4, and 5 to the dataset created in previous step 5, which contains the candidate seeds only.

8. Repeat steps 6 and 7 until the four gradient-based methods are used.

The method according to this invention improves the quality and reduces the uncertainty of the original pre-processing step of the Banks & Singer method, which relies only on high vorticity and low pressure thresholds, as it increases the probability of the aforementioned LB method to find candidate cells or points that will develop into a tip vortex core line in the subsequent predictor/corrector phase. With the inclusion of the four gradient-based methodologies described previously, the extraction of candidate seeds being related with the tip vortex, by means of the method according to this invention, becomes also less sensitive to the selection of thresholds, contrary to what happens with the thresholds of vorticity magnitude and static pressure. The method according to this invention combines the advantages of the four gradient-based vortex detection methods, minimizing the disadvantages that each individual methodology could introduce if considered separately.

The advantages introduced by the method according to this invention are presented in the following Table 1, for the example being considered with respect to a CROR CFD simulation. This table shows, for three thresholds of static pressure ($P$), vorticity magnitude ($|\omega|$), $Q$, $\Delta$, $\lambda_2$, and $N_k$, the ratio of volumes extracted over the total volume of the computational domain, and information about if the extracted volumes contain cells that are related with the tip vortex generated from the first blade row. Note that the thresholds exhibited for $Q$, $N_k$, $\Delta$, and $\lambda_2$ are shown in Figures 3 to 6, respectively, in the form of iso-surfaces of that threshold value.

For the highest threshold values of $Q$ and $\Delta$ exemplified in Table 1, tip vortices are not extracted. However, for the highly deviated thresholds of $\lambda_2$ and $N_k$ shown in this table, cells belonging to tip vortices are always extracted, demonstrating that the method according to this invention is much less sensitive to the selection of those values, when confronted to pressure and vorticity magnitude thresholds. For the latter, even with a threshold of 1% the maximum vorticity magnitude of the computational domain, no cell associated with the tip vortex is extracted. And for the static pressure, only with a threshold from 6 times its minimum value inside the computational domain, the extraction of cells related with the tip vortex is possible.

Table 1 shows also that for higher thresholds of $Q$, $\Delta$, and $N_k$, and lower values of $\lambda_2$, the ratio of volumes extracted over the total volume of the computational domain ($Vol/Vol_{domain}$) decreases, lowering the number of candidate seeds extracted and thus reducing the computational burden of the Banks and Singer method, once less evaluations are required. Moreover any threshold value of the aforementioned gradient-based parameters is able to extract cells belonging to tip vortices, enhancing the probability of the method according to this invention to extract candidate cells or points that have the potential to grow into a tip vortex core line, during the subsequent predictor/corrector phase of the Banks & Singer method.

| | | Threshold on | | | | |
| --- | --- | --- | --- | --- | --- | --- |
| | | $P$ | $|\omega|$ | $Q$ | $\Delta$ | $\lambda_2$ | $N_k$ |
| Threshold 1 | | $3.5P_{min}$ | $0.8*|\omega|_{max}$ | 1.1 | 50 | -1 | 1.1 |
| $Vol_1/Vol_{domain}$ [%] | | 0.0000 | 0.0000 | 0.0381 | 0.0258 | 0.0057 | 1.3949 |
| Cells within tip vortex from 1st row | | NO | NO | YES | YES | YES | YES |
| Threshold 2 | | $5.0P_{min}$ | $0.1*|\omega|_{max}$ | 50 | 2000 | -5 | 2.5 |
| $Vol_2/Vol_{domain}$ [%] | | 0.0002 | 0.0000 | 0.0044 | 0.0126 | 0.0019 | 0.0035 |
| Cells within tip vortex from 1st row | | NO | NO | YES | YES | YES | YES |
| Threshold 3 | | $6.0P_{min}$ | $0.01*|\omega|_{max}$ | 2500 | 1.00E+08 | -50 | 5 |
| $Vol_3/Vol_{domain}$ [%] | | 0.0025 | 0.0001 | 0.0007 | 0.0017 | 0.0002 | 0.0001 |
| Cells within tip vortex from 1st row | | YES | NO | NO | NO | YES | YES |

Table 1

Although the present invention has been described in connection with various embodiments, it will be appreciated from the specification that various combinations of elements, variations or improvements therein may be made, and are within the scope of the invention as defined by the appended claims.

**REFERENCES**

[1] H. Lugt, Vortex Flow in Nature and Technology (Wiley, 1972).

[2] S. Robinson, Annual Review Fluid Mechanics 23, 601 (1991).

[3] L. Portela, Ph.D. thesis, Stanford University, California (1997).

[4] V. Kolár, in Proceedings of the 8th WSEAS International Conference on Fluid Mechanics, 8th WSEASInternational Conference on Heat and Mass Transfer (World Scientific and Engineering Academy and Society (WSEAS), Stevens Point, Wisconsin, USA, 2011), FM'11/HMT'11, pp. 23-28, ISBN 978-960-474-268-4, URL http://dl.acm.org/citation.cfm?id=1959560.1959564.

[5] C. Garth, An introduction to flow visualization (5), http://graphics.cs.ucdavis.edu/-joy/ecs277/other-notes/ecs277-5.pdf, accessed: 2014-09-09.

[6] M. Jiang, R. Machiraju, and D. Thompson, in The Visualization Handbook (Academic Press, 2005), pp. 295-309.

[7] C. Garth, X. Tricoche, T. Salzbrunn, T. Bobach, and G. Scheuermann, in Proceedings of the Sixth Joint Eurographics - IEEE TCVG Conference on Visualization (Eurographics Association, Aire-la-Ville, Switzerland, 2004), VISSYM'04, pp. 155-164, ISBN 3-905673-07-X.

[8] D. Banks and B. Singer, IEEE Transactions on Visualization and Computer Graphics 1, 151 (1995).

[9] J. Hunt, A. Wray, and P. Moin, Tech. Rep., Center for Turbulence Research Report CTR-S88 (1988), pp. 193-208.

[10] C. Truesdell, The Kinematics of Vorticity (Indiana University Publ. Science Series No. 19, 1954).

[11] W. Schoppa and F. Hussain, Eddy Structure Identification (Springer-Verlag Wien, 1996), vol. 353 of CISM International Centre for Mechanical Sciences, chap. New Aspects of Vortex Dynamics Relevant to Coherent Structures in Turbulent Flows, pp. 61-143.

[12] U. Dallmann, in Proceedings of the 16th AIAA Fluid and Plasma Dynamics Conference (1983), AIAA-83-1735.

[13] M. Chong, A. Perry, and B. Cantwell, Physics of Fluids A 2, 765 (1990).

[14] P. Chakraborty, S. Balachandar, and R. Adrian, Journal of Fluid Mechanics 535, 189 (2005).

[15] J. Jeong and F. Hussain, Journal of Fluid Mechanics 285, 69 (1995).

[16] L. Pastur, Eulerian and Lagrangian coherent structures identification in fluid flows (von Karman Institute Lecture Series on "Advanced Post-Processing of Experimental and Numerical Data", 2013).

[17] J. Sahner, T. Weinkauf, and H. Hege, in Proceedings of the Seventh Joint Eurographics / IEEE VGTC Conference on Visualization (Leeds, United Kingdom, 2005), pp. 151-160.

## Claims

1. A computer-aided method suitable for assisting in the design of an object zone subjected to high vorticity and/or low static pressure fields when moving inside a flow field by providing suitable seed points for obtaining vortex core lines in a fluid data model of the environment of said object zone comprising the following steps:

    a) Obtaining a dataset containing all the cells or points satisfying one of the following conditions:

      - $Q > Q_{threshold}$, being $Q$ the Region-based $Q$-criterion and $Q_{threshold}$ a suitable positive parameter for the object zone;
      - $N_k > N_{k,threshold}$, being $N_k$ the Region-based Kinematic vorticity number and $N_{k,threshold}$ a suitable parameter higher than 1 for the object zone;
      - $\Delta > \Delta_{threshold}$, being $\Delta$ the Region-based $\Delta$-criterion and $\Delta_{threshold}$ a suitable positive parameter for the object

zone;

- $\lambda_2 < \lambda_{2threshold}$, being $\lambda_2$ the Region-based $\lambda_2$-criterion and $\lambda_{2threshold}$ a suitable negative parameter for the object zone;

b) Obtaining a new dataset containing all the cells or points of the previous dataset satisfying one of the conditions mentioned in step a) not selected previously;

c) Repeating the step b) until all the conditions mentioned in step a) have been selected in step b).

**2.** A computer-aided method according to claim 1, wherein the fluid data model comprises a CFD dataset and/or wind tunnel data and/or experimental volumetric data and/or flow field analytical data.

**3.** A computer-aided method according to any of claims 1-2, wherein said object is an aircraft.

**4.** A computer-aided method according to claim 3, wherein said object zone is a Counter Rotating Open Rotor (CROR) engine.

**5.** A computer-aided method according to claim 4, wherein said fluid data model comprises an area covering the vortices generated by a blade tip of the first stage of the engine that impact the second stage of the engine.

**6.** A system comprising a computer memory and processor for assisting in the design of an object zone subjected to high vorticity and/or low static pressure fields when moving inside a flow field by providing suitable seed points for obtaining vortex core lines in a fluid data model of the environment of said object zone, said computer memory having stored thereon modules comprising a computer-implemented fluid data model of the environment of said object zone and a computer-implemented module for identifying cells or points of said object zone satisfying vorticity conditions, wherein said computer-implemented module comprises means for performing said identification in the following steps:

a) Obtaining a dataset containing all the cells or points satisfying one of the following conditions:

- $Q > Q_{threhold}$, being Q the Region-based Q-criterion and $Q_{threshold}$ a suitable positive parameter for the object zone;

- $N_k > N_{k,threhold}$, being $N_k$, the Region-based Kinematic vorticity number and $N_{k,threshold}$ a suitable parameter higher than 1 for the object zone;

- $\Delta > \Delta_{threshold}$, being $\Delta$ the Region-based $\Delta$-criterion and $\Delta_{threshold}$ a suitable positive parameter for the object zone;

- $\lambda_2 < \lambda_{2threshold}$, being $\lambda_2$ the Region-based $\lambda_2$-criterion and $\lambda_{2threshold}$ a suitable negative parameter for the object zone;

b) Obtaining a new dataset containing all the cells or points of the previous dataset satisfying one of the conditions mentioned in step a) not selected previously;

c) Repeating the step b) until all the equations mentioned in step a) have been selected in step b).

**7.** A system according to claim 6, wherein the fluid model comprises a CFD dataset and/or wind tunnel data and/or experimental volumetric data and/or flow field analytical data.

**8.** A system according to any of claims 6-7, wherein said object is an aircraft.

**9.** A system according to claim 8, wherein said object zone is a Counter Rotating Open Rotor (CROR) engine.

**10.** A system according to claim 9, wherein said fluid data model comprises an area covering the vortices generated by a blade tip of the first stage of an engine that impact the second stage of the engine.

FIG. 1

FIG. 2

(a) Q=1.1

(a) Q=50

(a) Q=2500

**FIG. 3**

(a) $N_k$=1.1

(b) $N_k$=2.5

**FIG. 4**

(a) Δ=50    (b) Δ=2000

(c) Δ = 1x10$^8$

**FIG. 5**

(a) $\lambda_2 = -1$    (a) $\lambda_2 = -5$    (a) $\lambda_2 = -50$

**FIG. 6**

Europäisches
Patentamt

European
Patent Office

Office européen
des brevets

**EUROPEAN SEARCH REPORT**

Application Number

EP 16 38 2603

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | Clifton H Mortensen: "A Computational Fluid Dynamics Feature Extraction Method Using Subjective Logic", , 8 July 2010 (2010-07-08), pages 1-164, XP055366011, Retrieved from the Internet: URL:http://scholarsarchive.byu.edu/cgi/viewcontent.cgi?article=3207&context=etd [retrieved on 2017-04-20] * sections 1.2, 1.4; pages 5,7 * * the whole document * ----- | 1-10 | INV. G06F17/50 |
| Y | Václav Kolár: "Brief Notes on Vortex Identification", Proceeding FM'11/HMT'11 Proceedings of the 8th WSEAS international conference on fluid mechanics, 8th WSEAS international conference on Heat and mass transfer Pages 23-28, 29 January 2011 (2011-01-29), pages 1-6, XP055366001, ISBN: 978-960-474-268-4 Retrieved from the Internet: URL:http://www.wseas.us/e-library/conferences/2011/Mexico/MAFLUH/MAFLUH-03.pdf [retrieved on 2017-04-20] * page 1; table 1 * * the whole document * ----- | 1-10 | |

TECHNICAL FIELDS
SEARCHED (IPC)

G06F

The present search report has been drawn up for all claims

| Place of search | Date of completion of the search | Examiner |
|---|---|---|
| Munich | 1 June 2017 | Dapp, Wolfgang |

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **H. LUGT.** Vortex Flow in Nature and Technology. Wiley, 1972
- **S. ROBINSON.** *Annual Review Fluid Mechanics,* 1991, vol. 23, 601
- **L. PORTELA.** *Ph.D. thesis,* 1997
- **V. KOLÁR.** Proceedings of the 8th WSEAS International Conference on Fluid Mechanics, 8th WSEASInternational Conference on Heat and Mass Transfer. WSEAS, 2011, 23-28
- **C. GARTH.** *An introduction to flow visualization,* 09 September 2014, http://graphics.cs.ucdavis.edu/-joy/ecs277/other-notes/ecs277-5.pdf, accessed
- **M. JIANG ; R. MACHIRAJU ; D. THOMPSON.** The Visualization Handbook. Academic Press, 2005, 295-309
- **C. GARTH ; X. TRICOCHE ; T. SALZBRUNN ; T. BOBACH ; G. SCHEUERMANN.** Proceedings of the Sixth Joint Eurographics - IEEE TCVG Conference on Visualization. Eurographics Association, 2004, 155-164
- **D. BANKS ; B. SINGER.** *IEEE Transactions on Visualization and Computer Graphics,* 1995, vol. 1, 151
- **J. HUNT ; A. WRAY ; P. MOIN.** Tech. Rep. Center for Turbulence Research Report CTR-S88, 1988, 193-208
- **C. TRUESDELL.** The Kinematics of Vorticity. Indiana University Publ. Science Series No. 19, 1954
- CISM International Centre for Mechanical Sciences. **W. SCHOPPA ; F. HUSSAIN.** Eddy Structure Identification. Springer-Verlag, 1996, vol. 353, 61-143
- **U. DALLMANN.** *Proceedings of the 16th AIAA Fluid and Plasma Dynamics Conference,* 1983
- **M. CHONG ; A. PERRY ; B. CANTWELL.** *Physics of Fluids A,* 1990, vol. 2, 765
- **P. CHAKRABORTY ; S. BALACHANDAR ; R. ADRIAN.** *Journal of Fluid Mechanics,* 2005, vol. 535, 189
- **J. JEONG ; F. HUSSAIN.** *Journal of Fluid Mechanics,* 1995, vol. 285, 69
- Eulerian and Lagrangian coherent structures identification in fluid flows. **L. PASTUR.** Advanced Post-Processing of Experimental and Numerical Data. von Karman Institute Lecture Series, 2013
- **J. SAHNER ; T. WEINKAUF ; H. HEGE.** Proceedings of the Seventh Joint Eurographics. *IEEE VGTC Conference on Visualization,* 2005, 151-160